# EUROPEAN PATENT APPLICATION

(11) **EP 4 007 399 A1**
(43) Date of publication of application: **01.06.2022**
(21) Application number: 19941649.6
(22) Date of filing: 09.08.2019
(51) Int. Cl.: H04W 72/04

(54) **DATA TRANSMISSION METHOD, NETWORK DEVICE AND USER EQUIPMENT**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Manitz Finsterwald Patent- und Rechtsanwaltspartnerschaft mbB
(86) International application number: PCT/CN2019/100084
(87) International publication number: WO 2021/026701

(57) **Abstract**

Disclosed are a data transmission method, a network device, a user equipment, a chip, a computer-readable storage medium, a computer program product and a computer program. The method comprises: a network device sending downlink information to a user equipment (UE), wherein the downlink information includes: scheduling information of a downlink (DL) resource, and indication information used for determining an uplink (UL) resource paired with the DL resource.

## Description

### TECHNICAL FIELD

The present disclosure relates to the field of information processing technologies, and more particularly to a method for data transmission, a network device, user equipment (UE), a chip, a computer readable storage medium, a computer program product, and a computer program.

### BACKGROUND

With the pursuit of high speed, low latency, high-speed mobility and high energy efficiency, and the diversity and complexity of services in future life, the 3rd Generation Partner Project (3GPP) International Standards Organization begins to develop the 5^{th} generation mobile networks (called 5G). The application scenarios of 5G mainly include Enhanced Mobile Broadband (eMBB), Ultra-Reliable Low-Latency Communication (URLLC), and massive Machine Type of Communication (mMTC).

In an NR system, there are two scheduling methods for resources, i.e., dynamic scheduling (e.g., by Downlink Control Information (DCI)) and pre-configuration. For the dynamic scheduling, a DCI can only be used for uplink (UL) scheduling or downlink (DL) scheduling for a UE, i.e., the DCI is only used for indicating a transmission resource in one direction. Upon reception of the DL scheduling, the UE further needs to request the corresponding UL resource. In such case, the UE needs to request the network side again to allocate the UL resource to the UE, it will bring a large signaling overhead and cause a transmission delay.

### SUMMARY

To solve the above technical problems, embodiments of the present disclosure provide a method for data transmission, a network device, user equipment, a chip, a computer readable storage medium, a computer program product, and a computer program.

According to a first aspect, there is provided a method for data transmission. The method includes the following operations.

A network device transmits downlink information to user equipment (UE).

The downlink information includes: scheduling information for a downlink (DL) resource, and indication information for determining an uplink (UL) resource paired with the DL resource.

According to a second aspect, there is provided a method for data transmission. The method includes the following operations.

A network device transmits first information to user equipment (UE).

The first information is used by the UE to determine whether to perform an uplink feedback.

According to a third aspect, there is provided a method for data transmission. The method includes the following operations.

User equipment (UE) receives downlink information from a network device. The downlink information includes: scheduling information for a downlink (DL) resource, and indication information for determining an uplink (UL) resource paired with the DL resource.

According to a fourth aspect, there is provided a method for data transmission. The method includes the following operations.

First information is received from the network device. The first information is used by User equipment (UE) to determine whether to perform an uplink feedback.

Based on the first information, whether to perform the uplink feedback is determined.

According to a fifth aspect, a network device is provided. The network device includes a first communication.

The first communication unit is configured to transmit downlink information to user equipment (UE).

The downlink information includes: scheduling information for a downlink (DL) resource, and indication information for determining an uplink (UL) resource paired with the DL resource.

According to a sixth aspect, there is provided a network device, the network device includes a second communication unit.

The second communication unit is configured to transmit first information to user equipment (UE).

The first information is used by the UE to determine whether to perform an uplink feedback.

According to a seventh aspect, there is provided user equipment (UE). The UE includes a third communication unit.

The third communication unit is configured to receive downlink information from a network device. The downlink information includes: scheduling information for a downlink (DL) resource, and indication information for determining an uplink (UL) resource paired with the DL resource.

According to an eighth aspect, there is provided user equipment (UE). The UE includes a fourth communication unit and a fourth processing unit.

The fourth communication unit is configured to receive first information from a network device. The first information is used by the UE to determine whether to perform an uplink feedback.

The fourth processing unit is configured to determine, based on the first information, whether to perform the uplink feedback.

According to a ninth aspect, there is provided a network device including a processor and a memory. The memory is configured to store a computer program, and the processor is configured to invoke and execute the computer program stored in the memory to perform the method in the first aspect, or the second aspect, or each implementation of the first aspect or the second aspect.

According to a tenth aspect, there is provided user equipment including a processor and a memory. The memory is configured to store a computer program, and the processor is configured to invoke and execute the computer program stored in the memory to perform the method in the third aspect, or the fourth aspect, or each implementation of the third aspect or the fourth aspect.

According to an eleventh aspect, there is provided a chip for implementing a method in the above-described implementations.

Specifically, the chip includes a processor is configured to invoke and execute a computer program from a memory to enable a device equipped with the chip to perform the method in any one of the first to fourth aspects or the method in each implementation of any one of the first to fourth aspects.

According to a twelfth aspect, there is provided a computer-readable storage medium having stored thereon a computer program that, when executed, causes a computer to perform the method in any one of the first to fourth aspects or the method in each implementation of any one of the first to fourth aspects.

According to a thirteenth aspect, there is provided a computer program product including computer program instructions that, when executed, cause a computer to perform the method in any one of the first to fourth aspects or the method in each implementation of any one of the first to fourth aspects.

According to a fourteenth aspect, there is provided a computer program which, when run on a computer, causes a computer to perform the method in any one of the first to fourth aspects or the method in each implementation of any one of the first to fourth aspects.

According to the above solution of the present disclosure, the indication information for determining, by the UE, the UL resource paired with the DL resource can be transmitted at the same time when the DL resource is scheduled. As a result, the signaling overhead caused by allocating the UL resource to the UE after the DL resource is scheduled is reduced, the data transmission delay is reduced, and the processing efficiency of the system is improved.

### BRIEF DESCRIPTION OF THE DRAWINGS

FIG. 1 is a first diagram of a system architecture of a communication system according to an embodiment of the present disclosure.
FIG. 2 is a first flowchart of a method for data transmission according to an embodiment of the present disclosure.
FIG. 3 is a second flowchart of a method for data transmission according to an embodiment of the present disclosure.
FIG. 4-1 is a third flowchart of a method for data transmission according to an embodiment of the present disclosure.
FIG. 4-2 is a fourth flowchart of a method for data transmission according to an embodiment of the present disclosure.
FIG. 4-3 is a fifth flowchart of a method for data transmission according to an embodiment of the present disclosure.
FIG. 5 is a sixth flowchart of a method for data transmission according to an embodiment of the present disclosure.
FIG. 6 is a seventh flowchart of a method for data transmission according to an embodiment of the present disclosure.
FIG. 7 is an eighth flowchart of a method for data transmission according to an embodiment of the present disclosure.
FIG. 8 is a first diagram of a composition structure of a network device according to an embodiment of the present disclosure.
FIG. 9 is a first diagram of a composition structure of user equipment according to an embodiment of the present disclosure.
FIG. 10 is a second diagram of a composition structure of a network device according to an embodiment of the present disclosure.
FIG. 11 is a second diagram of a composition structure of user equipment according to an embodiment of the present disclosure.
FIG. 12 is a diagram of a composition structure of a communication device according to an embodiment of the present disclosure.
FIG. 13 is a block diagram of a chip according to an embodiment of the present application.
FIG. 14 is a second diagram of a system architecture of a communication system according to an embodiment of the present disclosure.

### DETAILED DESCRIPTION

In order to understand the features and technical contents of the embodiments of the present disclosure in more detail, the implementation of the embodiments of the present disclosure will be described in detail below with reference to the accompanying drawings. The accompanying drawings are only for illustration purposes and are not intended to limit the embodiments of the present disclosure.

The technical solutions in the embodiments of the present disclosure will be described below with reference to the accompanying drawings in the embodiments of the present disclosure. It is apparent that the described embodiments are some but not all of the embodiments of the present disclosure. Based on the embodiments of the present disclosure, all other embodiments obtained by those of ordinary skill in the art without creative effort shall fall within the scope of the protection of the present disclosure.

The technical solutions of the embodiments of the present disclosure may be applied to various communication systems, such as a Global System of Mobile Communication (GSM), a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, or a 5G system.

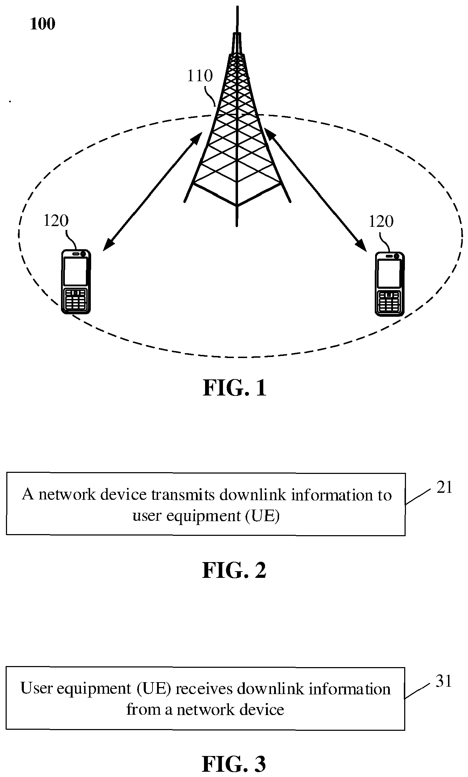

Exemplarily, the communication system 100 to which the embodiments of the present disclosure are applied is illustrated in FIG. 1. The communication system 100 may include a network device 110, which may be a device in communication with a UE 120 (referred to as a communication terminal, or a terminal). The network device 110 may provide communication coverage for a particular geographic area and may communicate with terminals located within the coverage area. Optionally, the network device 110 may be a base transceiver station (BTS) in a GSM system or a CDMA system, or a NodeB (NB) in a WCDMA system, or an Evolutional Node B (eNB or eNodeB) in an LTE system, or a radio controller in a cloud radio access network (CRAN). Or, the network device may be a mobile switching center, a relay station, an access point, a vehicle-mounted device, a wearable device, a hub, a switch, a bridge, a router, a network-side device in a 5G network, a network device in a future evolved public land mobile network (PLMN), or the like.

The communication system 100 further includes at least one UE 120 located within the coverage of the network device 110. The "UE" herein includes but is not limited to a device that is configured to receive or transmit communication signals via wired line connections, such as via Public Switched Telephone Networks (PSTN), Digital Subscriber Lines (DSL), digital cables, direct cable connections and/or another data connection/network; and/or via wireless interfaces, such as wireless interfaces configured for cellular networks, wireless local area networks (WLAN), Digital Video Broadcasting Handheld (DVB-H) networks like a digital Television (TV) network, satellite networks, Amplitude Modulation and Frequency Modulation (AM-FM) broadcast transmitters and/or another terminal and/or Internet of Things (IoT) device. A terminal configured to communicate via a wireless interface may be referred to as a "wireless communication terminal", a "wireless terminal" or a "mobile terminal".

In an embodiment, the Device to Device (D2D) communication may be performed between UEs 120.

It should be understood that the terms "system" and "network" are commonly used interchangeably herein. The term "and/or" herein is only an association relationship describing associated objects, which means that there may be three relationships. For example "A and/or B" may have three meanings: A exists alone, A and B exist at the same time and B exists alone. In addition, the character "/" herein generally indicates that the associated objects before and after the character "/" are in an "or" relationship.

To facilitate the understanding of the technical solutions of the embodiments of the present disclosure, the implementation of the embodiments of the present disclosure will be described in detail below with reference to the accompanying drawings. The accompanying drawings are only for illustration purposes and are not intended to limit the embodiments of the present disclosure.

An embodiment of the present disclosure provides a method for data transmission. As illustrated in FIG. 2, the method includes the following operations.

At an operation 21, a network device transmits downlink information to user equipment (UE).

The downlink information includes: scheduling information for a downlink (DL) resource, and indication information for determining an uplink (UL) resource paired with the DL resource.

An embodiment of the present disclosure further provides a method for data transmission. As illustrated in FIG. 3, the method includes the following operations.

At an operation 31, a UE receives downlink information from a network device. The downlink information includes: scheduling information for a downlink (DL) resource, and indication information for determining an uplink (UL) resource paired with the DL resource.

That is to say, the information, which is transmitted by the network device to the UE, for scheduling the DL resource includes indication information for determining the UL resource paired with the DL resource. Accordingly, based on the downlink information, the UE can simultaneously determine a location for receiving the scheduled DL resource and a location for transmitting the UL resource corresponding to the DL resource. Thus, the signaling overhead caused by use of additional signaling to notify the UE of the UL resource to be used can be reduced, and the time delay can be reduced.

The downlink information may be carried by at least one of: downlink control information (DCI), or a media access control (MAC) control element (CE), i.e., may be carried by a DCI and/or a MAC CE.

In the embodiments, the network device may be an access network device, such as a base station.

The solutions provided in the embodiments are described in detail below with reference to various examples.

### First example

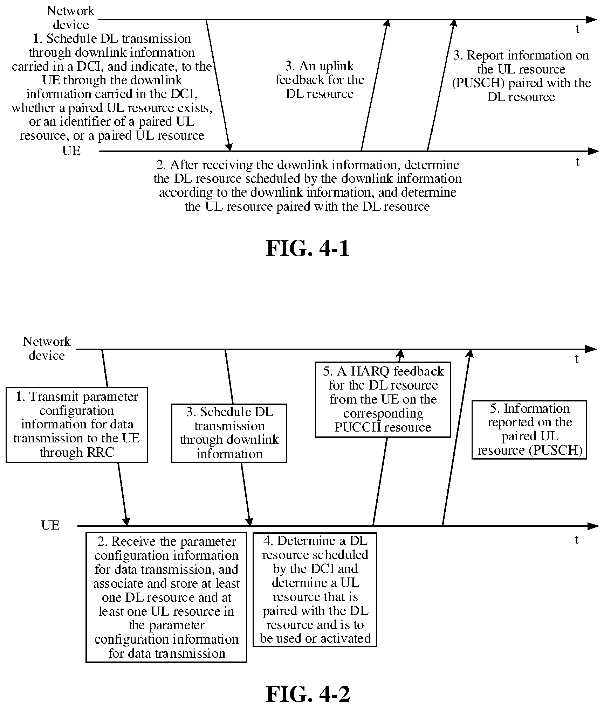

For example, with reference to FIG. 4-1, the solution includes the following operations.

At an operation 1, a network device schedules DL transmission through downlink information carried in a DCI, and indicates, to UE through the downlink information carried in the DCI, whether a paired UL resource exists, or an identifier of a paired UL resource, or a paired UL resource.

Specifically, in the downlink information, the scheduling information for the DL resource may include at least one of: DL resource configuration information, a DL resource activation indication, or a DL resource identifier.

The DL resource configuration information may include a time-frequency resource for the DL resource, an identifier of the DL resource, and/or the like. A specific example of the DL resource may be a Semi-Persistent Scheduling (SPS) resource, or a dynamically scheduled DL resource.

The DL resource activation indication may include: a time-frequency resource for the DL resource and/or an indication of whether the DL resource is to be activated, and/or, an identifier of the DL resource and/or an indication of whether the DL resource corresponding to the identifier is to be activated. For example, the DL resource activation indication indicates that an SPS resource is to be activated. For example, the DL resource activation indication indicates that a resource corresponding to an SPS index M is to be activated.

The DL resource identifier indicates, for example, an SPS resource index.

For UL transmission, the indication information for determining the UL resource paired with the DL resource includes at least one of: an indication of whether the UL resource paired with the DL resource exists, an indication of whether the UL resource paired with the DL resource is to be activated, information of a UL resource scheduled for the UE, a UL resource activation indication, an indication of an identifier of the UL resource paired with the DL resource, or, an identifier of the DL resource.

Specifically, the indication of whether the UL resource paired with the DL resource exists can be represented by an indication bit. For example, if the indication bit indicates 1, which represents that a UL resource paired with the DL resource exists, then the UE activates or uses the paired UL resource at the same time when receiving the dynamically scheduled DL resource. Otherwise, if the indication bit indicates 0, which represent that configuration information of a UL resource is absent.

Differing from the indication of whether the UL resource paired with the DL resource exists, the indication of whether the UL resource paired with the DL resource is to be activated indicates, to the UE by an indication bit, whether the paired UL resource is to be activated in the default case where the paired UL resource exists on the UE side. For example, if the indication bit indicates 1, which represents that the UL resource paired with the DL resource is to be activated or used; and if the indication bit indicates 0, which represents that the UL resource paired with the DL resource is not to be used. Specifically, the information of the DL resource and the UL resource paired with the DL resource that are stored on the UE side may be configured by the network, or may be predefined, or may be determined by the UE.

The information of the UL resource scheduled for the UE may be understood as, for example, a dynamically scheduled UL resource configured by the network device for the UE. The information of the UL resource scheduled for the UE may include a time-frequency resource for the UL resource, or the information of the UL resource scheduled for the UE may be a time-frequency resource for the UL resource and identification information of the UL resource.

The UL resource activation indication only indicates the activation of the UL resource. However, the UL resource activation indication does not specifically indicate which UL resource is to be activated. There may be the following two situations. In a situation, when the UE is configured with only one UL resource, the UE can determine the UL resource to be activated as long as the UE receives the UL resource activation indication. In another situation, when the UE is configured with multiple UL resources, the UE may select one UL resource from the multiple UL resources and activate the selected UL resource. Such a selection may be performed randomly, or may be performed according to signal quality of different UL resources. For example, a UL resource with the best signal quality is preferably selected. Alternatively, according to the UL resource activation indication and the indication of the identifier of the UL resource paired with the DL resource, the UE may determine, from the multiple UL resources, that the uplink resource corresponding to the UL resource index (i.e., identifier) is to be activated or used.

The indication of the identifier of the UL resource paired with the DL resource may include only an identifier of the UL resource, such as an identifier (e.g., index) of the CG (Configured Grant) resource.

When only the identifier of the DL resource is configured, it can be understood that the UE selects, according to the identifier of the DL resource, a UL resource matching the identifier of the DL resource as the paired UL resource. Such a selection may be performed by the UE randomly, or may be performed according to a linkage relationship between the DL resource and the UL resource. Such linkage relationship may be preset, or may be configured by the network.

In the downlink information, the indication information for determining the UL resource paired with the DL resource may include one or more pieces of information among the above-described information. For example, in the example, since a DL resource and a UL resource paired with the DL resource are not configured for the UE in advance, the network device may transmit, to the UE, an indication indicating that a UL resource paired with the DL resource exists, along with information of the UL resource scheduled for the UE.

For another example, as a default, the network device may deem that the UE have pre-stored multiple UL resources, or the UE is configured with multiple UL resources (for example, configured grant), so that the network device may only transmit the UL resource activation indication, and then the UE may determine which UL resource is used as the UL resource paired with the DL resource. Alternatively, the network device may transmit an indication of the identifier of the UL resource paired with the DL resource while transmitting the UL resource activation indication, so that the UE can determine to activate a UL resource and determine which UL resource is to be activated.

It should be noted that when the indication of whether the UL resource paired with the DL resource exists is present alone, if the indication of whether the UL resource paired with the DL resource exists indicates that a UL resource paired with the DL resource exists, the corresponding paired UL resource may be further determined; if the indication of whether the UL resource paired with the DL resource exists indicates that a UL resource paired with the DL resource is absent, subsequent processing may be performed in accordance with the related art. In addition, if the indication of whether the UL resource paired with the DL resource exists indicates that a UL resource paired with the DL resource is absent, as a default, the network device may need to instruct the UE in combination with other information (such as the information of the UL resource scheduled for the UE, the indication of the identifier of the UL resource paired with the DL resource, and/or the like) in the indication information for determining the UL resource paired with the DL resource.

It should be noted that the downlink information may be carried in a DCI, or may be indicated to the UE by a media access control control element (MAC CE). However, when the downlink information is carried in the MAC CE, the remaining manners except the manner of indicating a dynamically scheduled UL resource are applicable to the indication manner based on the MAC CE.

At an operation 2, after receiving the downlink information, the UE determines the DL resource scheduled by the downlink information according to the downlink information, and determines the UL resource paired with the DL resource. Then the UE performs data transmission based on the DL resource and the paired UL resource.

For example, the UE obtains a resource location of a PDSCH according to the DCI, and obtains a requirement of the network (i.e., temperature detection signaling which instructs the UE to perform temperature detection and report temperature information) on the resource corresponding to the PDSCH. According to the indication of whether the paired UL resource is to be activated or used and/or the CG index, the UE determines to use the paired UL resource, and determines that the paired UL resource is CG resource(s), an identifier of which is CG index 2. The UE detects the temperature, and reports the detected temperature information based on the resource corresponding to the CG index 2, or one latest resource /N resources /all resources corresponding to the CG index 2.

For another example, the UE determines, according to the DCI, that the resource corresponding to SPS index 3 is to be activated, and obtains, according to a resource location that corresponds to the SPS index 3 and is configured by radio resource control (RRC), a requirement of the network (i.e., temperature detection signaling which instructs the UE to perform temperature detection and report the temperature information) on the corresponding SPS resource. Because of the indication of whether the paired UL resource is to be activated or used and/or the CG index are indicated in the DCI, the UE determines to use the paired UL resource, and the paired UL resource is the CG resource(s), an identifier of which is CG index 2, the UE detects the temperature, and reports the detected temperature information based on the resource corresponding to the CG index 2, or one latest resource/N resources/all resources corresponding to the CG index 2.

For another example, the UE obtains a resource location of a PDSCH according to the DCI, obtains a requirement of the network (i.e., temperature detection signaling which instructs the UE to perform temperature detection and report temperature information) on the resource corresponding to the PDSCH. Since a dynamically scheduled UL resource is also indicated in the DCI, the UE determines that the paired UL resource exists and the specific UL resource to be used. Then the UE reports the detected temperature information based on the dynamically scheduled UL resource simultaneously indicated in the DCI.

At an operation 3, the network device then receives, on the PUCCH resource, an uplink feedback (for example, HARQ feedback) for the DL resource (grant) from the UE, and receives, on the UL resource (grant) (PUSCH) paired with the DL resource, information reported by the UE.

In the above example, the UE determines the UL resource paired with the DL resource directly according to the downlink information transmitted by the network device, and then performs data transmission.

### Second example

Differing from the first example, in the second example, before the network device transmits the downlink information, the network device may perform pre-configuration for the UE. Specifically, the network device may transmit, to the UE, parameter configuration information for data transmission.

The parameter configuration information for data transmission includes at least one of: at least one DL resource configured for the UE, or at least one UL resource configured for the UE.

That is to say, the UE may receive in advance multiple DL resources and multiple UL resources that are configured for the UE by the network device. It should be noted here that paired UL-DL resources may exist or not exist among the multiple UL resources and the multiple DL resources.

If the paired UL-DL resources exist among the multiple UL resources and the multiple DL resources, the parameter configuration information for data transmission further includes a linkage relationship between the at least one DL resource and the at least one UL resource. The linkage relationship between the at least one DL resource and the at least one UL resource may include a linkage relationship between a DL resource and a UL resource, that is, a linkage relationship between a DL resource and a UL resource paired with the DL resource. Of course, the linkage relationship between the at least one DL resource and the at least one UL resource may include a linkage relationship between one DL resource and multiple UL resources, that is, a linkage relationship between a DL resource and multiple UL resources paired with the DL resource. Of course, the linkage relationship between the at least one DL resource and the at least one UL resource may include a linkage relationship between one UL resource and multiple DL resources, that is, a linkage relationship between a UL resource and multiple DL resources paired with the UL resource.

The parameter configuration information for data transmission further includes information of a group to which the UE belongs in group scheduling, which may be an identifier of a UE group to which the UE belongs. In this way, the network device may schedule the UE by means of the group scheduling. For example, the downlink information is used for scheduling a UE group.

The parameter configuration information for data transmission is carried by an RRC message or a broadcast message.

After the above-described processing is completed, the subsequent processing may be performed using the solution provided in the first example.

The second example will be described in detail with reference to FIG. 4-2.

At an operation 1, a network device transmits parameter configuration information for data transmission to a UE through RRC. Specifically, the parameter configuration information for data transmission includes at least one of: information of a group to which UE belongs in group scheduling, at least one DL resource configured for the UE, or at least one UL resource configured for the UE.

The information of the group to which the UE belongs in the group scheduling indicates an RNTI (Radio Network Temporary Identifier) used for the group scheduling and/or an identifier of the group for the group scheduling.

The at least one DL resource configured for the UE includes at least one DL resource preconfigured for the UE, which may be at least one preconfigured DL time-frequency resource, such as an SPS resource and an SPS index corresponding to the SPS resource.

The at least one UL resource configured for the UE includes at least one UL resource preconfigured for the UE, which may be at least one UL time-frequency resource preconfigured for the UE, such as a CG resource and a CG index corresponding to the CG resource.

The information of the group to which the UE belongs in the group scheduling may be predefined or determined by the UE.

The RNTI used for the group scheduling may also be predefined.

At an operation 2, the UE receives and stores the parameter configuration information for data transmission. When the group scheduling may be used, the UE may perform detection through an RNTI for the group scheduling, or the UE may perform detection through both an RNTI for the group scheduling and an RNTI for the UE.

With reference to the foregoing operations 1 and 2, the DL resource and the UL resource which are preconfigured may be configured in the following two manners.

In a first manner, resources are paired and stored by the UE. For example, in the operation 2, after receiving the parameter configuration information for data transmission, the UE associates and stores at least one DL resource and at least one UL resource contained in the parameter configuration information for data transmission. One DL resource may be paired with one UL resource, or one DL resource may be paired with multiple UL resources, or one UL resource may be paired with multiple DL resources, which is handled by the UE.

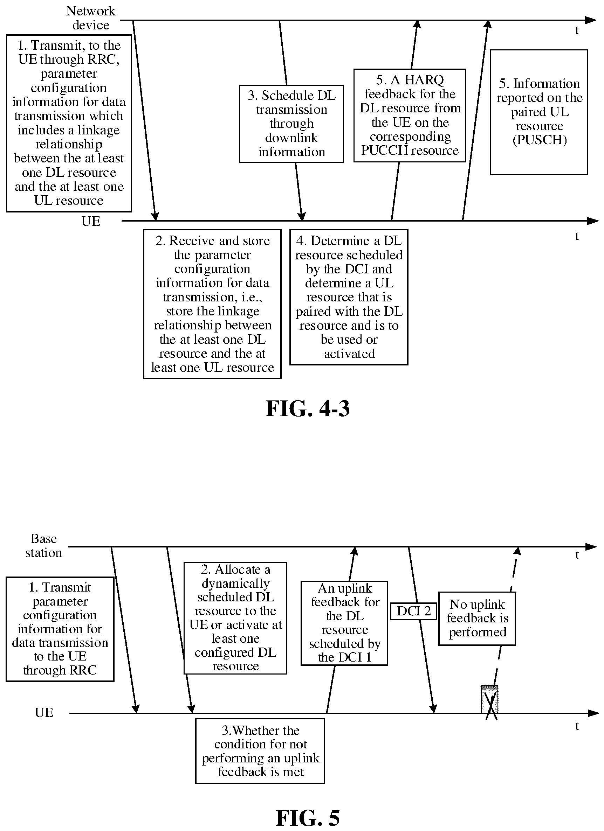

In a second manner, referring to FIG. 4-3, the linkage relationship between the at least one DL resource and the at least one UL resource may be further configured in the parameter configuration information for the data transmission in the operation 1. The linkage relationship between the at least one DL resource and the at least one UL resource is then stored by the UE. Similarly, the linkage relationship may include a pairing between one DL resource and one UL resource, or a pairing between one DL resource and multiple UL resources, or a pairing between one UL resource and multiple DL resources.

Specifically, at least one of the followings is configured in a dedicated RRC signaling or a broadcast massage: a UL resource and an identifier of the UL resource, a DL resource and an identifier of the DL resource, or a linkage relationship between the UL resource and the DL resource (such as a binding relationship between the UL resource index and the DL resource index). When the base station performs, through the DCI, the UE specific scheduling or the group scheduling, such as requesting the UE to report the temperature detection result, the index of the DL resource is indicated in the DCI. After receiving the DCI, the UE determines, according to the linkage relationship, the UL resource index and the UL resource corresponding to the UL resource index, and performs data transmission (such as transmission of temperature detection result) based on the UL resource. In this way, the overhead and delay of the control signaling caused by scheduling the UL resource through the DCI after the DL resource is scheduled by the DCI can be avoided.

At an operation 3, the network device schedules DL transmission through downlink information, and indicates, in the downlink information, to the UE whether a paired UL resource is available or is to be activated, whether a paired UL resource exists, or an identifier of a paired UL resource or a paired UL resource.

The specific contents included in the downlink information and the processing manner of any combination thereof may be illustrated in the first example, and details are not described herein. In addition, the downlink information may be carried by the DCI, or may be carried by the MAC CE. When the downlink information is carried by the MAC CE, the downlink information does not include the dynamically scheduled UL resource.

In addition, in the second example, there may be a combination different from that in the first example. For example, in the foregoing operations 1 and 2 of the second example, the DL resource and the UL resource have been preconfigured, and the linkage relationship between the DL resource and the UL resource has been pre-configured by the UE or the network device.

Therefore, in the second example, as a default, the network device may deem that the UE has a UL resource paired with a DL resource, and thus the downlink information may only indicate whether the paired UL resource is to be activated. Alternatively, the downlink information may only carry the identifier of the DL resource, and then the UE can determine the UL resource paired with the DL resource according to the linkage relationship. Alternatively, the downlink information may only carry the identifier of the UL resource, and then the UE can determine, according to the linkage relationship, to activate/use the UL resource, and/or the DL resource paired with the UL resource.

At an operation 4, after receiving the downlink information, the UE may determine, according to the downlink information, a DL resource scheduled by the downlink information and a UL resource that is paired with the DL resource and is to be used or activated, and perform data transmission based on the DL resource and the paired UL resource. Further, it should be noted that if the paired UL resource is determined not to be activated or used according to the downlink information, the UE waits for the network device to indicate, through a new signaling, the UL resources to the UE, which will not be described in detail in the example.

At an operation 5, the network device receives, on the corresponding PUCCH resource, a HARQ feedback for the DL grant from the UE, and receives, on the paired UL grant (PUSCH), the information reported by the UE.

### Third example

An indication of whether a UE performs an uplink feedback and a processing method thereof may include the following operations.

A network device transmits first information to a UE. The first information is used by the UE to determine whether to perform an uplink feedback.

Accordingly, the UE may perform the following processing.

The UE receives first information from a network device. The first information is used by the UE to determine whether to perform an uplink feedback. The UE determines, based on the first information, whether to perform the uplink feedback.

The uplink feedback may be a HARQ feedback for downlink scheduling.

It should be noted that not performing an uplink feedback may refer to no feedback, or no indication about a feedback. Specifically, it may be that no uplink feedback is performed for a UE, a UE group, a HARQ process, a traffic type, current scheduling, a specific time, or a specific LCH (Logical Channel).

The first information includes at least one of: indication information indicating whether the UE performs an uplink feedback, a UE type for which no uplink feedback is performed, a traffic type for which no uplink feedback is performed, a UE group identifier for which no uplink feedback is performed, a UE identifier for which no uplink feedback is performed, or a process identifier for which no uplink feedback is performed.

As to the indication information indicating whether the UE performs the uplink feedback: the indication information indicates, by taking the UE as a granularity, whether the UE needs to perform an uplink feedback. Alternatively, the indication information indicates whether the UE performs an uplink feedback for current scheduling.

As to the UE type for which no uplink feedback is performed: in this case, the first information may include indication information of at least one UE type. That is, the UE determines whether to perform an uplink feedback. If the UE belongs to one of the at least one UE type indicated in the first information, the UE does not perform an uplink feedback. If the UE does not belong to any one of the at least one UE type indicated in the first information, the UE performs an uplink feedback.

As to the traffic type for which no uplink feedback is performed: the traffic type may include a type of a specific traffic or a list of traffic types including e.g., at least one specific traffic. Once a traffic currently performed by the UE, a traffic configured for the UE, or a currently activated traffic is a traffic included in the list of traffic types, the UE does not perform an uplink feedback.

As to the UE group identifier for which no uplink feedback is performed: if the first information includes at least one UE group identifier, all the UEs in the UE group corresponding to the UE group identifier do not perform an uplink feedback. The UE group identifier (ID) of the UE group to which the UE belongs may be preconfigured or indicated. Alternatively, the UE group identifier may be a preconfigured or indicated RNTI for the corresponding group. The UE belonging to a UE group detects scheduling through the RNTI for the corresponding group. Alternatively, the UE detects scheduling through the RNTI dedicated for the UE and the RNTI for the corresponding group.

The first information may include one piece of information or multiple pieces of information. For example, the first information may include indication information indicating whether the UE performs an uplink feedback, a UE identifier for which no uplink feedback is performed, and a traffic type for which no uplink feedback is performed. When the UE determines not to perform an uplink feedback according to the first information, the UE may further determine whether the UE corresponds to the UE identifier (or the UE type) for which no uplink feedback is performed as indicated in the first information. If the UE corresponds to the UE identifier (or the UE type) for which no uplink feedback is performed as indicated in the first information, the UE determines, based on the traffic type for which no uplink feedback is performed, whether the uplink feedback is performed for the traffic currently processed by the UE.

Of course, there may also be other combinations which will not be listed in the example.

With the example, the UE can be configured not to perform an uplink feedback when a certain condition is met, that is, not to perform a HARQ feedback, so as to reduce the overhead of PUCCH.

In addition, the third example may be used in combination with the first example or the second example, or the third example may be used separately. When the third example is used in combination with the first example or the second example, after determining whether to perform an uplink feedback, the UE may determine, by the first example or the second example, the UL resource paired with the DL resource and perform subsequent processing.

A processing method of the third example includes the following operations.

At an operation 1, a network device transmits first information to a UE. The first information may be carried by at least one of: a DCI, a MAC CE, RRC signaling or broadcast information.

Specifically, the first information may include at least one of: information of a group to which the UE belongs in group scheduling, indication information indicating whether the UE performs an uplink feedback, a UE group identifier for which no uplink feedback is performed, a UE type for which no uplink feedback is performed, a traffic type for which no uplink feedback is performed, a UE identifier for which no uplink feedback is performed, or a process identifier for which no uplink feedback is performed.

The information of the group to which the UE belongs in the group scheduling includes an RNTI used for the group scheduling and/or an identifier of the group for the group scheduling.

The indication information indicating whether the UE performs the uplink feedback may be indication information indicating whether a HARQ less function is enabled. If the HARQ less function is enabled, the UE or the UE that satisfies the condition may not feed back the HARQ-ACK, or the UE currently scheduled may not feed back the HARQ-ACK.

The UE group identifier for which no uplink feedback is performed may be, for example, a UE group identifier that indicates HARQ less. If a UE group identifier is indicated, the UEs in the UE group corresponding to the UE group identifier may not feed back the HARQ-ACK.

The UE type for which no uplink feedback is performed may be, for example, a UE type identifier that indicates HARQ less. If a UE type is indicated, the UE with the UE type may not feed back the HARQ-ACK.

The traffic type for which no uplink feedback is performed may be, for example, a traffic type identifier that indicates HARQ less. If a traffic type is indicated, the UE carrying the traffics corresponding to the traffic type may not feed back the HARQ-ACK, or the UE may not feed back the HARQ-ACK for the traffics corresponding to the traffic type.

The UE identifier for which no uplink feedback is performed may be, for example, an UE identifier that indicates HARQ less. If a UE identifier is indicated, the UE corresponding to the UE identifier may not feed back HARQ-ACK.

The process identifier for which no uplink feedback is performed may be, for example, a HARQ process identifier that indicates HARQ less. If a HARQ process identifier is indicated, the HARQ process corresponding to the HARQ process identifier may not feed back HARQ-ACK.

At an operation 2, the UE receives the first information.

Further, the UE determines, according to the parameters configured for the UE by the network in the first information, whether the UE satisfies a condition of not performing an uplink feedback. That is to say, whether a condition for execution of the HARQ less is satisfied, and a HARQ feedback is not performed when the condition is satisfied.

For example, the first information includes a group identifier (UE group ID 1) and/or an indication indicating that a HARQ less function is enabled, if an SPS scheduling or a dynamic scheduling indicated by a DCI is received and the scheduled object is the object in the UE group corresponding to the UE group identifier, the UE in the UE group does not perform a HARQ-ACK feedback.

For another example, the first information includes a UE identifier (UE ID 1) and/or an indication indicating that a HARQ less function is enabled, if an SPS scheduling or a dynamic scheduling indicated by a DCI is received and the scheduled object is a UE corresponding to the UE ID 1, the UE does not perform a HARQ-ACK feedback.

For another example, the first information includes a traffic type for which no uplink feedback is performed and/or an indication indicating that the UE does not perform an uplink feedback (i.e., the HARQ less function is enabled), if an SPS scheduling or a dynamic scheduling indicated by a DCI is received, the UE supporting or carrying the traffics corresponding to the traffic type does not perform a HARQ-ACK feedback.

Another processing method of the third example includes the following operations.

At an operation 1, a network device transmits, to a UE through RRC, parameter configuration information for data transmission, such as an SPS resource, an SPS index, and the like. The detailed description is the same as in the second example, and details are not described herein.

At an operation 2, the network device allocates a dynamically scheduled DL resource for the UE or activates at least one configured DL resource. That is, by means of scheduling, a dynamically scheduled DL resource (dynamic grant for DL) is allocated to the UE or at least one configured DL resource (SPS for DL) is activated for the UE. The operation of activating the at least one configured DL resource may be activating one of the at least one pre-configured DL resource, or activating multiple DL resources among the at least one pre-configured DL resource.

Further, the base station transmits the first information to the UE via a DCI or a MAC CE. The specific description of the first information is the same as that in the foregoing processing method, and details are not described herein again.

At an operation 3, the UE receives the first information and the parameter configuration information for data transmission, determines whether the UE satisfies a condition of not performing an uplink feedback, and does not perform an uplink feedback when the condition is satisfied. For example, the UE determines whether the UE satisfies a condition of execution of the HARQ less, and does not perform a HARQ feedback when the condition is satisfied.

For example, the first information includes a specific RNTI (an RNTI for scheduling of a specific group), if the UE belonging to the group receives a downlink resource scheduled by the RNTI, the UE in the group does not perform a HARQ-ACK feedback.

For another example, the first information includes a UE identifier (UE ID 1) and/or an indication indicating that a HARQ less function is enabled, if an SPS scheduling or a dynamic scheduling indicated by a DCI is received and the scheduled object is a UE corresponding to the UE ID 1, the UE does not perform a HARQ-ACK feedback.

For another example, the first information includes a traffic type for which no uplink feedback is performed and/or an indication indicating that a HARQ less function is enabled, if an SPS scheduling or a dynamic scheduling indicated by a DCI is received, a UE supporting or carrying the traffics corresponding to the traffic type does not perform a HARQ-ACK feedback.

On the basis of the foregoing, the first information further includes at least one of: a time period during which no uplink feedback for DL scheduling is performed, a time pattern in which no uplink feedback for DL scheduling is performed, or an identifier of a logical channel for which no uplink feedback is performed.

The time period during which no uplink feedback for DL scheduling is performed can be understood as a downlink time period during which the DL scheduling, for which no uplink feedback is performed, is located. That is, during the downlink time period, no uplink feedback for contents scheduled by the DL resources need to be performed. Specifically, the time period during which no uplink feedback for DL scheduling is performed may be a downlink time period corresponding to a PDCCH, or a downlink time period corresponding to a PDSCH scheduled by the PDCCH. Alternatively, the time period during which no uplink feedback for DL scheduling is performed can be understood as an uplink time period during which no uplink feedback for DL scheduling is performed. That is, during the time period, the DL scheduling is received but if a time for performing an uplink feedback corresponding to the DL scheduling is within the uplink time period, the uplink feedback is not performed. Alternatively, the time period during which no uplink feedback for DL scheduling is performed may be understood as an uplink time period during which no uplink feedback for DL scheduling is performed, that is, if a time for performing an uplink feedback corresponding to the DL scheduling is within the time period, the uplink feedback is not performed. It is to be understood that the time here may be a time period (e.g., from SFN1 to SFN10) or may be a time point (e.g., SFN1). Similarly, the time pattern for the uplink feedback can also be understood as the above two dimensions, and details are not described herein.

For example, the network device, that is, the base station, indicates a time or a time pattern for DL scheduling for which the UE does not perform a HARQ feedback, or indicates a logical channel for which no HARQ feedback is performed. Correspondingly, when the UE receives the DL scheduling during the corresponding time or the time pattern, or when the UE determines that the DL scheduling includes data on the corresponding logical channel, the UE does not perform an uplink HARQ feedback for the resource scheduled by the DL scheduling, that is, the UE does not feedback HARQ ACK/NACK through the PUCCH. In this way, the determination of whether or not to perform an uplink feedback becomes more flexible.

FIG. 5 is an example in which at an operation 1, the network device, i.e., the base station, transmits first information to a UE; at an operation 2, the network device transmits a DCI 1 to the UE; at an operation 3, the UE determines whether to perform an uplink feedback for the DL resource scheduled by the DCI 1, and the UE determines, according to a determination result, that an uplink feedback is to be performed for the DL resource scheduled by the DCI 1. Alternatively, the UE receives a DCI 2, and determines, according to a determination result, that an uplink feedback is not to be performed for the DL resource scheduled by the DCI 2.

Finally, for the foregoing first example, second example and third example, the following processing may be further included.

The UE transmits second information to the network device. The second information includes at least one of: a type of the UE, a traffic type supported by the UE, a traffic type used by the UE, capability information of the UE about whether to support not performing an uplink feedback, or capability information of the UE about whether to support using or activating a paired UL transmission. Accordingly, the network device receives the second information from the UE.

In an example, before the network indicates the first information, the network obtains, by a first node, related information, such as a UE type, a traffic type supported by the UE, and capability information of the UE about whether to support HARQ less, and the network determines whether to indicate the first information to the UE. The first node may be a UE, a core network, a central control node in an industrial network, or the like. Therefore, reporting of the second information can assist the base station in a better configuration and scheduling.

In another example, the UE reports second information to the network device. The second information is used for the network device to determine one or more of the followings.

Based on the second information, the network device determines whether to transmit first information to the UE.

Based on the second information, the network device determines whether to generate downlink information for the UE.

Based on the second information, the network device determines whether to configure, for the UE, parameter configuration information for data transmission.

A time for reporting the second information may be a time when the UE initially connects to the network, or a time when the UE updates a processing, such as changing to a new traffic type, or the like.

It can be seen that by adopting the above solution, the indication information for determining the paired UL resource by the UE can be transmitted at the same time when the DL resource is scheduled. As a result, the signaling overhead caused by allocating the UL resource to the UE after the DL resource is scheduled is reduced, the data transmission delay is reduced, and the processing efficiency of the system is improved.

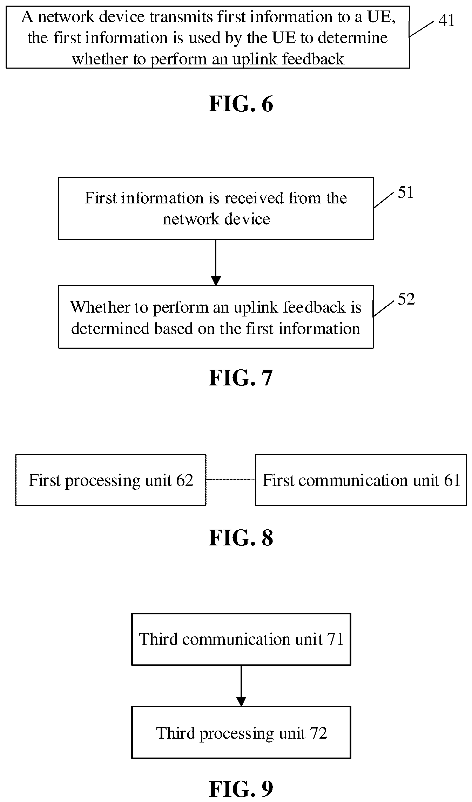

An embodiment of the present disclosure further provides a method for data transmission. Referring to FIG. 6, the method may the following operations.

At an operation 41, a network device transmits first information to a UE. The first information is used by the UE to determine whether to perform an uplink feedback.

Accordingly, a method for data transmission on the UE side, as illustrated in FIG. 7, includes the following operations.

At an operation 51, first information is received from the network device. The first information is used by the UE to determine whether to perform an uplink feedback.

At an operation 52, whether to perform the uplink feedback is determined based on the first information.

The uplink feedback may be a HARQ feedback for downlink scheduling.

It should be noted that not performing an uplink feedback may refer to no feedback, or no indication about a feedback. Specifically, it may be that no uplink feedback is performed for a UE, a UE group, a HARQ process, a traffic type, current scheduling, a specific time, or a specific LCH (Logical Channel).

The first information includes one or more of the followings.

Indication information indicating whether the UE performs an uplink feedback. That is, by taking the UE as a granularity, indicating whether the UE needs to perform an uplink feedback. Alternatively, indicating whether the UE performs an uplink feedback for current scheduling.

A UE type for which no uplink feedback is performed. In this case, the first information may include indication information indicating at least one UE type. That is, the UE determines whether to perform an uplink feedback. If the UE belongs to one of the at least one UE type indicated in the first information, the UE does not perform an uplink feedback. If the UE does not belong to any one of the at least one UE type indicated in the first information, the UE performs an uplink feedback.

A traffic type for which no uplink feedback is performed. That is, a type of a specific traffic, or a list of traffic types which may include at least one specific traffic. Once a traffic currently performed by the UE, a traffic configured for the UE, or a currently activated traffic is a traffic included in the list of traffic types, the UE does not perform an uplink feedback.

A UE group identifier for which no uplink feedback is performed. That is, if the first information includes at least one UE group identifier, all the UEs in the UE group corresponding to the UE group identifier do not perform an uplink feedback. The UE group identifier (ID) of the UE group to which the UE belongs may be preconfigured or indicated. Alternatively, the UE group identifier may be a preconfigured or indicated RNTI for the corresponding group. The UE group belonging to a UE group detects scheduling through the RNTI for the corresponding group. Alternatively, the UE detects scheduling through a UE-specific RNTI and the RNTI for the corresponding group.

A UE identifier for which no uplink feedback is performed.

A process identifier for which no uplink feedback is performed.

The first information may include one piece of information or multiple pieces of information. For example, the first information may include indication information indicating whether the UE performs an uplink feedback, a UE identifier for which no uplink feedback is performed, and a traffic type for which no uplink feedback is performed. When the UE determines not to perform an uplink feedback according to the first information, the UE may further determine whether the UE corresponds to the UE identifier (or the UE type) for which no uplink feedback is performed as indicated in the first information. If the UE corresponds to the UE identifier (or the UE type) for which no uplink feedback is performed as indicated in the first information, the UE determines, based on the traffic type for which no uplink feedback is performed, whether the uplink feedback is performed for the traffic currently processed by the UE.

Of course, there may also be other combinations which will not be listed in the embodiments.

With the embodiments, the UE can be configured not to perform an uplink feedback when a certain condition is met, that is, not to perform a HARQ feedback, so as to reduce the overhead of PUCCH.

A processing method includes the following operations.

At an operation 1, a network device transmits first information to a UE. The first information may be carried by at least one of: a DCI, a MAC CE, RRC signaling or broadcast information.

Specifically, the first information may include one or more of the followings.

Information of a group to which the UE belongs in group scheduling. Specifically, an RNTI used for the group scheduling, and/or a group identifier of the group for the group scheduling.

Indication information indicating whether the UE performs an uplink feedback. Specifically, indicating whether a HARQ less function is enabled. If the HARQ less function is enabled, the UE or the UE that satisfies the condition may not feed back the HARQ-ACK, or the UE currently scheduled may not feed back the HARQ-ACK.

A UE group identifier for which no uplink feedback is performed. For example, a UE group identifier that indicates HARQ less. If a UE group identifier is indicated, the UE in the UE group corresponding to the UE group identifier may not feed back the HARQ-ACK.

A UE type for which no uplink feedback is performed. For example, a UE type identifier that indicates HARQ less. If a UE type is indicated, the UE with the UE type may not feed back the HARQ-ACK.

A traffic type for which no uplink feedback is performed. For example, a traffic type identifier that indicates HARQ less. If a traffic type is indicated, the UE carrying the traffics corresponding to the traffic type may not feed back the HARQ-ACK, or the UE may not feed back the HARQ-ACK for the traffics corresponding to the traffic type.

A UE identifier for which no uplink feedback is performed. For example, an UE identifier that indicates HARQ less. If a UE identifier is indicated, the UE corresponds to the UE identifier may not feed back HARQ-ACK.

A process identifier for which no uplink feedback is performed. For example, a HARQ process identifier that indicates HARQ less. If a HARQ process identifier is indicated, the HARQ process corresponding to the HARQ process identifier may not feed back HARQ-ACK.

At an operation 2, the UE receives the first information.

Further, the UE determines, according to the parameters configured for the UE by the network in the first information, whether the UE satisfies a condition of not performing an uplink feedback. That is, the UE determines whether a condition for execution of HARQ less is satisfied, and HARQ feedback is not performed when the condition is satisfied.

For example, the first information includes a group identifier (UE group ID 1) and/or an indication indicating that a HARQ less function is enabled, if an SPS scheduling or a dynamic scheduling indicated by a DCI is received and the scheduled object is the object in the UE group corresponding to the UE group identifier, the UE in the UE group does not perform a HARQ-ACK feedback.

For another example, the first information includes a UE identifier (UE ID 1) and/or an indication indicating that a HARQ less function is enabled, if an SPS scheduling or a dynamic scheduling indicated by a DCI is received and the scheduled object is a UE corresponding to the UE ID 1, the UE does not perform a HARQ-ACK feedback.

For another example, the first information is a traffic type for which no uplink feedback is performed and/or an indication indicating that UE does not perform an uplink feedback (i.e., the HARQ less function is enabled), if an SPS scheduling or a dynamic scheduling indicated by a DCI is received, a UE supporting or carrying the traffics corresponding to the traffic type does not perform a HARQ-ACK feedback.

Another processing method includes the following operations.

At an operation 1, a network device transmits, to UE through RRC, parameter configuration information for data transmission, such as an SPS resource, an SPS index, and the like. The detailed description is the same as in the second example, and details are not described herein.

At an operation 2, the network device allocates a dynamically scheduled DL resource to the UE or activates at least one configured DL resource. That is, by means of scheduling, a dynamically scheduled DL resource (dynamic grant for DL) is allocated to the UE or at least one configured DL resource (SPS for DL) is activated for the UE. The operation of activating the at least one configured DL resource may be activating one of the at least one pre-configured DL resource, or activating multiple DL resources among the at least one pre-configured DL resource.

Further, the base station transmits the first information to the UE via a DCI or a MAC CE. The specific description of the first information is the same as that in the foregoing processing method, and details are not described herein again.

At an operation 3, the UE receives the first information and the parameter configuration information for data transmission, determines whether the UE satisfies a condition for execution of HARQ less, and does not perform a HARQ feedback when the condition is satisfied.

For example, the first information includes a specific RNTI (an RNTI for scheduling of a specific group), if the UE that belongs to the group receives a downlink resource scheduled by the RNTI, the UE in the group does not perform a HARQ-ACK feedback.

For another example, the first information includes a UE identifier (UE ID 1) and/or an indication indicating that a HARQ less function is enabled, if an SPS scheduling or a dynamic scheduling indicated by a DCI is received and the scheduled object is a UE corresponding to the UE ID 1, the UE does not perform a HARQ-ACK feedback.

For another example, the first information includes a traffic type for which no uplink feedback is performed and/or an indication indicating that a HARQ less function is enabled, if an SPS scheduling or a dynamic scheduling indicated by a DCI is received, a UE supporting or carrying the traffics corresponding to the traffic type does not perform a HARQ-ACK feedback.

On the basis of the foregoing, the first information further includes one or more of the following s.

A time period during which no uplink feedback for DL scheduling is performed.

A time pattern in which no uplink feedback for DL scheduling is performed.

An identifier of a logical channel for which no uplink feedback is performed.

The time period during which no uplink feedback for DL scheduling is performed can be understood as a downlink time period in which the DL scheduling, for which no uplink feedback is performed, is located. That is, during the downlink time period, no uplink feedback for contents scheduled by DL resources need to be performed. Specifically, the time period during which no uplink feedback for DL scheduling is performed may be a downlink time period corresponding to a PDCCH, or a downlink time period corresponding to a PDSCH scheduled by the PDCCH. Alternatively, the time period during which no uplink feedback for DL scheduling is performed can be understood as an uplink time period during which no uplink feedback for DL scheduling is performed. That is, during the time period, DL scheduling is received but a time for performing an uplink feedback corresponding to the DL scheduling is within the uplink time period, the uplink feedback is not performed. Alternatively, the time period during which no uplink feedback for DL scheduling is performed may be understood as an uplink time period during which no uplink feedback for DL scheduling is performed, that is, if an uplink feedback corresponding to the DL scheduling is within the time period, the uplink feedback is not performed. It is to be understood that the time here may be a time period (e.g., from SFN1 to SFN10) and may be a time point (e.g., SFN1). Similarly, the time pattern for the uplink feedback can also be understood as the above two dimensions, and details are not described herein.

For example, the network device, that is, the base station, indicates a time or a time pattern for DL scheduling for which the UE does not perform a HARQ feedback, or indicates a logical channel for which no HARQ feedback is performed. Correspondingly, when the UE receives the DL scheduling during the corresponding time or the time pattern, or when the UE determines that the DL scheduling includes data on the corresponding logical channel, the UE does not perform an uplink HARQ feedback for the resource scheduled by the DL scheduling, that is, the UE does not feedback HARQ ACK/NACK through the PUCCH. In this way, the determination of whether or not to perform an uplink feedback becomes more flexible.

Finally, the embodiments may further include the following processing.

The UE transmits second information to the network device. The second information includes at least one of: a type of the UE, a traffic type supported by the UE, a traffic type used by the UE, capability information of the UE about whether to support not performing an uplink feedback, or capability information of the UE about whether to support using or activating a paired UL transmission. Accordingly, the network device receives the second information from the UE.

In an example, before the network indicates the first information, the network obtains, by a first node, related information, such as a UE type, a traffic type supported by the UE, and capability information of the UE about whether to support HARQ less, and the network determines whether to indicate the first information to the UE. The first node may be a UE, a core network, a central control node in an industrial network, or the like. Therefore, reporting of the second information assists the base station in a better configuration and scheduling.

In another example, the UE reports second information to the network device. The second information is used for the network device to determine one or more of the followings.

Based on the second information, the network device determines whether to transmit first information to the UE.

Based on the second information, the network device determines whether to generate downlink information for the UE.

Based on the second information, the network device determines whether to configure, for the UE, parameter configuration information for data transmission.

A time for reporting the second information may be a time when the UE initially connects to the network, or a time when the UE updates a processing, such as changing to a new traffic type, or the like.

It can be seen that by adopting the above solution, the terminal can be controlled to determine whether to perform an uplink feedback, so that some traffics or some terminals do not perform an uplink feedback, thereby reducing the problem of large signaling overheads, reducing the delay of data transmission, and improving the processing efficiency of the system.

An embodiment of the present disclosure provides a network device. As illustrated in FIG. 8, the network device includes a first communication unit 61.

The first communication unit 61 is configured to transmit downlink information to user equipment (UE).

The downlink information includes: scheduling information for a downlink (DL) resource, and indication information for determining an uplink (UL) resource paired with the DL resource.

An embodiment of the present disclosure further provides user equipment (UE). As illustrated in FIG. 9, the UE includes a third communication unit 71.

The third communication unit 71 is configured to receive downlink information from a network device. The downlink information includes: scheduling information for a downlink (DL) resource, and indication information for determining an uplink (UL) resource paired with the DL resource.

That is, the information, which is transmitted by the network device to the UE, for scheduling the DL resource includes indication information for determining the UL resource paired with the DL resource. Accordingly, based on the downlink information, the UE can simultaneously determine a location for receiving the scheduled DL resource and a location for transmitting the UL resource corresponding to the DL resource. Thus, the signaling overhead caused by use of additional signaling to notify the UE of the UL resource to be used can be reduced, and the time delay can be reduced.

The downlink information may be carried by downlink control information (DCI) and/or a media access control (MAC) control element (CE).

In the embodiments, the network device may be an access network device, such as a base station.

In the following, the solutions provided in the embodiments will be described in detail with reference to various examples.

### First example

The first communication unit 61 of the network device is configured to schedule DL transmission through downlink information carried in a DCI; and indicate, to the UE through the downlink information carried in the DCI, whether a paired UL resource exists, or an identifier of a paired UL resource, or a paired UL resource.

Specifically, in the downlink information, the scheduling information for the DL resource may include at least one of: DL resource configuration information, a DL resource activation indication, or a DL resource identifier.

The DL resource configuration information includes a time-frequency resource for the DL resource, an identifier of the DL resource, and the like. A specific example of the DL resource may be an SPS (Semi-Persistent Scheduling) resource, or a dynamically scheduled DL resource.

The DL resource activation indication includes: a time-frequency resource for the DL resource and/or an indication of whether the DL resource is to be activated, and/or, an identifier of the DL resource and/or an indication of whether the DL resource corresponding to the identifier is to be activated. For example, the DL resource activation indication indicates that an SPS resource is to be activated. For example, the DL resource activation indication indicates that an SPS resource corresponding to an SPS index M is to be activated.

The DL resource identifier indicates, for example, an SPS resource index.

For UL transmission, the indication information for determining the UL resource paired with the DL resource includes one or more of: an indication of whether the UL resource paired with the DL resource exists, an indication of whether the UL resource paired with the DL resource is to be activated, information of a UL resource scheduled for the UE, a UL resource activation indication, an indication of an identifier of the UL resource paired with the DL resource, or an identifier of the DL resource.

The user equipment (UE) further includes a third processing unit 72.

After the third communication unit 71 of the UE receives the downlink information, the third processing unit 72 is configured to determine a DL resource scheduled by the downlink information according to the downlink information, and determine the UL resource paired with the DL resource. The UE performs data transmission based on the DL resource and the paired UL resource.

The first communication unit 61 of the network device then receives, on the PUCCH resource, an uplink feedback for the DL grant from the UE, such as a HARQ feedback, and receives, on the UL grant (PUSCH) paired with the DL resource, information reported by the UE.

In the above example, the UE determines the UL resource paired with the DL resource directly according to the downlink information transmitted by the network device, and then performs data transmission.

### Second example

Differing from the first example, in the second example, before the network device transmits the downlink information, the network device may perform a pre-configuration for the UE. Specifically, the first communication unit 61 of the network device may transmit parameter configuration information for data transmission to the UE.

The parameter configuration information for data transmission includes at least one of: at least one DL resource configured for the UE, or at least one UL resource configured for the UE.

That is, the UE may receive in advance multiple DL resources and multiple UL resources which are configured for the UE by the network device. It should be noted here that paired DL-UL resources may exist or not exist among the multiple UL resources and the multiple DL resources.

If the paired DL-UL resources exist among the multiple UL resources and the multiple DL resources, the parameter configuration information for data transmission further includes a linkage relationship between the at least one DL resource and the at least one UL resource. The linkage relationship between the at least one DL resource and the at least one UL resource may include a linkage relationship between a DL resource and a UL resource, that is, between a DL resource and a UL resource paired with the DL resource. Of course, the linkage relationship between the at least one DL resource and the at least one UL resource may also include a linkage relationship between one DL resource and multiple UL resources, that is, between a DL resource and multiple UL resources paired with the DL resource. Of course, the linkage relationship between the at least one DL resource and the at least one UL resource may include a linkage relationship between one UL resource and multiple DL resources, that is, between a UL resource and multiple DL resources paired with the UL resource.

The parameter configuration information for data transmission further includes information of a group to which the UE belongs in group scheduling, which may be a UE group identifier of the UE group to which the UE belongs. In this way, the network device may schedule the UE by means of the group scheduling. For example, the downlink information is used for the scheduling for a UE group.

The parameter configuration information for data transmission is carried by an RRC message or a broadcast message.

After the above-described processing is completed, the subsequent processing may be performed based on the solution provided in the first example.

### Third example

An indication of whether the UE performs an uplink feedback and a processing method thereof may include the following operations.

A first communication unit 61 of the network device transmits first information to the UE. The first information is used by the UE to determine whether to perform an uplink feedback.

Accordingly, the UE may perform the following processing.

A third communication unit 71 is configured to receive first information from a network device. The first information is used by the UE to determine whether to perform an uplink feedback. The UE determines to perform the uplink feedback based on the first information.

The uplink feedback may be a HARQ feedback for downlink scheduling.

It should be noted that not performing an uplink feedback may refer to no feedback, or no indication about a feedback. Specifically, it may be that no uplink feedback is performed for a UE, a UE group, a HARQ process, a traffic type, current scheduling, a specific time, or a specific LCH (Logical Channel).

The first information includes one or more of the followings.

Indication information indicating whether the UE performs an uplink feedback. That is, by taking the UE as a granularity, indicating whether the UE needs to perform an uplink feedback. Alternatively, indicating whether the UE performs an uplink feedback for current scheduling.

A UE type for which no uplink feedback is performed. In this case, the first information may include indication information of at least one UE type. That is, the UE determines whether to perform an uplink feedback. If the UE belongs to one of the at least one UE type indicated in the first information, the UE does not perform an uplink feedback. If the UE does not belong to any one of the at least one UE type indicated in the first information, the UE performs an uplink feedback.

A traffic type for which no uplink feedback is performed. That is, a type of a specific traffic, or a list of traffic types which may include e.g., at least one specific traffic. Once a traffic currently performed by the UE, a traffic configured for the UE, or a currently activated traffic is a traffic included in the list of traffic types, the UE does not perform an uplink feedback.

A UE group identifier for which no uplink feedback is performed. That is, if the first information includes at least one UE group identifier, all the UEs in the UE group corresponding to the UE group identifier do not perform an uplink feedback. The UE group identifier (ID) of the UE group to which the UE belongs may be preconfigured or indicated. Alternatively, the UE group identifier may be a preconfigured or indicated RNTI for the corresponding group. The UE belonging to the UE group detects scheduling through the RNTI for the corresponding group. Alternatively, the UE detects scheduling through a UE-specific RNTI and the RNTI for the corresponding group.

A UE identifier for which no uplink feedback is performed.

A process identifier for which no uplink feedback is performed.

The first information may include one piece of information or multiple pieces of information. For example, the first information may include indication information indicating whether the UE performs an uplink feedback, a UE identifier for which no uplink feedback is performed, and a traffic type for which no uplink feedback is performed. When the UE determines not to perform an uplink feedback according to the first information, the UE may further determine whether the UE corresponds to the UE identifier (or the UE type) for which no uplink feedback is performed as indicated in the first information. If the UE corresponds to the UE identifier (or the UE type) for which no uplink feedback is performed as indicated in the first information, the UE determines, based on the traffic type for which no uplink feedback is performed, whether the uplink feedback is performed for the traffic currently processed by the UE.

Of course, there may also be other combinations which will not be listed in this example.

With the example, the UE can be configured not to perform an uplink feedback when a certain condition is met, that is, not to perform a HARQ feedback, so as to reduce the overhead of PUCCH.

In addition, the third example may be used in combination with the first example or the second example, or the third example may be used separately. When the third example is used in combination with the first example or the second example, after determining whether to perform an uplink feedback, the UE may determine, by using the first example or the second example, the UL resource paired with the DL resource and perform subsequent processing.

Another processing method of the present example is as follows.

The first communication unit 61 of the network device is configured to transmit, to the UE through RRC, parameter configuration information for data transmission, such as an SPS resource, an SPS index, and the like. The detailed description is the same as in second example, and details are not described herein.

The first communication unit 61 of the network device is configured to allocate a dynamically scheduled DL resource for the UE or activate at least one configured DL resource. That is, by means of scheduling, a dynamically scheduled DL resource (dynamic grant for DL) is allocated to the UE or at least one configured DL resource (SPS for DL) is activated for the UE. The operation of activating the at least one configured DL resource may be activating one of the at least one pre-configured DL resource, or activating multiple DL resources among the at least one pre-configured DL resource.

Further, the base station transmits the first information to the UE via a DCI or a MAC CE. The specific description of the first information is the same as that in the foregoing processing method, and details are not described herein again.

The third communication unit 71 of the UE is configured to receive first information and parameter configuration information for data transmission. The third processing unit 72 of the UE is configured to determine whether the UE satisfies a condition of execution of HARQ less, and not perform a HARQ feedback when the condition is satisfied.

On the basis of the foregoing, the first information further includes at least one of; a time period during which no uplink feedback for DL scheduling is performed, a time pattern in which no uplink feedback for DL scheduling is performed, or an identifier of a logical channel for which no uplink feedback is performed.

The time period during which no uplink feedback for DL scheduling is performed can be understood as a downlink time period in which the DL scheduling, for which no uplink feedback is performed, is located. That is, during the downlink time period, no uplink feedback for contents scheduled by the DL resources need to be performed. Specifically, the time period during which no uplink feedback for DL scheduling is performed may be a downlink time period corresponding to a PDCCH, or a downlink time period corresponding to a PDSCH scheduled by the PDCCH. Alternatively, the time period during which no uplink feedback for DL scheduling is performed can be understood as an uplink time period during which no uplink feedback for DL scheduling is performed. That is, during the time period, the DL scheduling is received but a time for an uplink feedback corresponding to the DL scheduling is within the uplink time period, the uplink feedback is not performed. Alternatively, the time period during which no uplink feedback for DL scheduling is performed may be understood as an uplink time period during which no uplink feedback for DL scheduling is performed, that is, if a time for an uplink feedback corresponding to the DL scheduling is within the time period, the uplink feedback is not performed. It is to be understood that the time here may be a time period (e.g., from SFN1 to SFN10) or may be a time point (e.g., SFN1). Similarly, the time pattern for the uplink feedback can also be understood as the above two dimensions, and details are not described herein.

Finally, for the foregoing first example, second example and third example, the following processing may be further included.

The third communication unit 71 of the UE is configured to transmit second information to the network device. The second information includes at least one of: a type of the UE, a traffic type supported by the UE, a traffic type used by the UE, capability information of the UE about whether to support not performing an uplink feedback, and capability information of the UE about whether to support using or activating a paired UL transmission. Accordingly, the network device receives the second information from the UE.

In an example, before the network indicates the first information, the network obtains, by a first node, related information, such as a UE type, a traffic type supported by the UE, and capability information of the UE about whether to support HARQ less. The first processing unit 62 is configured to determine whether to indicate the first information to the UE. The first node may be a UE, a core network, or a central control node in an industrial network, or the like. Therefore, reporting of the second information can assist the base station in a better configuration and scheduling.

In another example, the third communication unit 71 of the UE is configured to report second information to the network device. The second information is used for a first processing unit 62 of the network device to determine one or more of the followings.

Based on the second information, the network device determines whether to transmit first information to the UE.

Based on the second information, the network device determines whether to generate downlink information for the UE.

Based on the second information, the network device determines whether to configure, for the UE, parameter configuration information for data transmission.

A time for reporting the second information may be a time when the UE initially connects to the network, or a time when the UE updates a processing, such as changing to a new traffic type, or the like.

It can be seen that Based on the above solutions, the indication information for determining the paired UL resource by the UE can be transmitted at the same time when the DL resource is scheduled. As a result, the signaling overhead caused by allocating the UL resource to the UE after the DL resource is scheduled is reduced, the data transmission delay is reduced, and the processing efficiency of the system is improved.

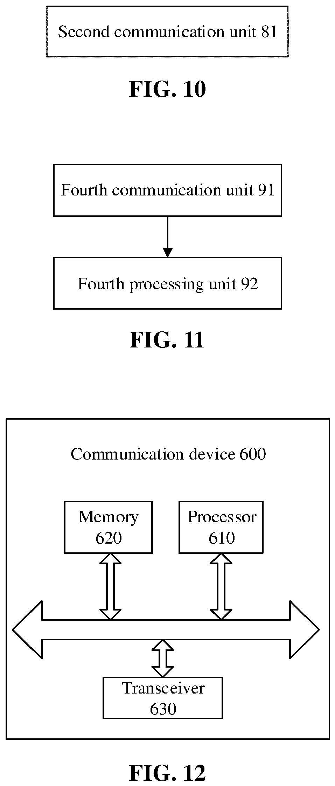

An embodiment of the present disclosure further provides a network device. Referring to FIG. 10, the network device may include a second communication unit 81.

The second communication unit 81 is configured to transmit first information to a UE. The first information is used by the UE to determine whether to perform an uplink feedback.

Accordingly, an embodiment of the present disclosure further provides a UE. As illustrated in FIG. 11, the UE includes a fourth communication unit 91 and a fourth processing unit 92.

The fourth communication unit 91 is configured to receive first information from a network device. The first information is used by the UE to determine whether to perform an uplink feedback.

The fourth processing unit 92 is configured to determine whether to perform the uplink feedback based on the first information.

The uplink feedback may be a HARQ feedback for downlink scheduling.

It should be noted that not performing an uplink feedback may refer to no feedback, or no indication about a feedback. Specifically, it may be that no uplink feedback is performed for a UE, a UE group, a HARQ process, a traffic type, current scheduling, a specific time, or a specific LCH (Logical Channel).

The first information includes one or more of the followings.

Indication information indicating whether the UE performs an uplink feedback. That is, by taking the UE as a granularity, indicating whether the UE needs to perform an uplink feedback. Alternatively, indicating whether the UE performs an uplink feedback for current scheduling.

A UE type for which no uplink feedback is performed. In this case, the first information may include indication information of at least one UE type. That is, the UE determines whether to perform an uplink feedback. If the UE belongs to one of the at least one UE type indicated in the first information, the UE does not perform an uplink feedback. When the UE does not belong to any one of the at least one UE type indicated in the first information, the UE performs an uplink feedback.

A traffic type for which no uplink feedback is performed. That is, a type of a specific traffic, or a list of traffic types which may include e.g., at least one specific traffic. Once a traffic currently performed by the UE, a traffic configured for the UE, or a currently activated traffic is a traffic included in the list of traffic types, the UE does not perform an uplink feedback.

A UE group identifier for which no uplink feedback is performed. That is, if the first information includes at least one UE group identifier, all the UEs in the UE group corresponding to the UE group identifier do not perform an uplink feedback. The UE group identifier (ID) of the UE group to which the UE belongs may be preconfigured or indicated. Alternatively, the UE group identifier may be a preconfigured or indicated RNTI for the corresponding group. The UE belonging to a UE group detects scheduling through the RNTI for the corresponding group. Alternatively, the UE detects scheduling through the UE-specific RNTI and the RNTI for the corresponding group.

A UE identifier for which no uplink feedback is performed.

A process identifier for which no uplink feedback is performed.

The first information may include one piece of information or multiple pieces of information. For example, the first information may include indication information indicating whether the UE performs an uplink feedback, a UE identifier for which no uplink feedback is performed, and a traffic type for which no uplink feedback is performed. When the UE determines not to perform an uplink feedback according to the first information, the UE may further determine whether the UE corresponds to the UE identifier (or the UE type) for which no uplink feedback is performed as indicated in the first information. If the UE corresponds to the UE identifier (or the UE type) for which no uplink feedback is performed as indicated in the first information, the UE determines, based on the traffic type for which no uplink feedback is performed, whether the uplink feedback is performed for the traffic currently processed by the UE.

Of course, there may also be other combinations which will not be listed in the example.

With the embodiments, the UE can be configured not to perform an uplink feedback when a certain condition is met, that is, not to perform a HARQ feedback, so as to reduce the overhead of PUCCH.

It can be seen that based on the above solutions, the terminal can be controlled to determine whether to perform an uplink feedback, so that some traffics or some terminals do not perform an uplink feedback, thereby reducing the problem of large signaling overheads, reducing the delay of data transmission, and improving the processing efficiency of the system.

FIG. 12 is a diagram of a composition structure of a communication device 600 according to an embodiment of the present disclosure. The communication device may be a terminal or a network device. The communication device 600 illustrated in FIG. 12 includes a processor 610 configured to invoke and run computer programs from a memory to implement the methods in the embodiments of the present disclosure.

In an embodiment, as illustrated in FIG. 12, the communication device 600 may further include a memory 620. The processor 610 may invoke and run computer programs from the memory 620 to implement the methods in the embodiments of the present disclosure.

The memory 620 may be a separate device independent of the processor 610 or may be integrated within the processor 610.

In an embodiment, as illustrated in FIG. 12, the communication device 600 may further include a transceiver 630 that may be controlled by the processor 610 to communicate with other devices, in particular to transmit information or data to other devices or receive information or data transmitted by other devices.

The transceiver 630 may include a transmitter and a receiver. The transceiver 630 may further include an antenna, the number of antennas may be one or more.

In an embodiment, the communication device 600 may be implemented as the network device of the embodiments of the present disclosure, and the communication device 600 may implement a corresponding flow implemented by the network device in each method of the embodiments of the present disclosure. For brevity, details are not described herein.

In an embodiment, the communication device 600 may be implemented as the terminal device of the embodiments of the present disclosure, and the communication device 600 may implement the corresponding flow implemented by the mobile terminal/terminal device in the methods of the embodiments of the present disclosure. For brevity, details are not described herein.

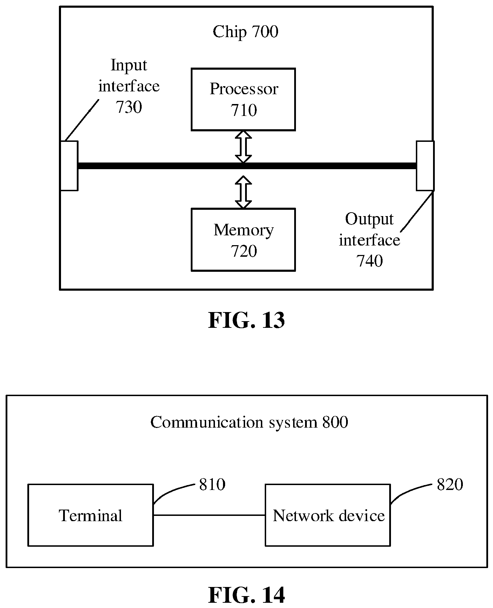

FIG. 13 is a diagram of a composition structure of a chip according to an embodiment of the present disclosure. The chip 700 illustrated in FIG. 13 includes a processor 710 configured to invoke and run computer programs from a memory to implement the methods in the embodiments of the present disclosure.

In an embodiment, as illustrated in FIG. 13, the chip 700 may further include a memory 720. The processor 710 may invoke and run computer programs from the memory 720 to implement the methods in the embodiments of the present disclosure.

The memory 720 may be a separate device independent of the processor 710 or may be integrated within the processor 710.

In an embodiment, the chip 700 may further include an input interface 730. The processor 710 may control the input interface 730 to communicate with other devices or chips, so as to acquire information or data transmitted by the other devices or chips.

In an embodiment, the chip 700 may further include an output interface 740. The processor 710 may control the output interface 740 to communicate with other devices or chips, so as to output information or data to other devices or chips.

In an embodiment, the chip may be applied to the network device/terminal device in the embodiments of the present disclosure, and the chip may implement a corresponding flow implemented by the network device/the terminal device in each method in the embodiments of the present disclosure. For brevity, details are not described herein.

It should be understood that the chip mentioned in the embodiments of the present disclosure may also be referred to as a system level chip, a system chip, a chip-on system or the like.

It should be understood that the processor of the embodiments of the disclosure may be an integrated circuit chip with signal processing capability. In the implementation process, the operations of the foregoing method embodiments may be completed by instructions in the form of software or the integrated logic circuits of the hardware in the processor. The above-mentioned processor may be a general-purpose processor, a digital signal processor (DSP), an application specific integrated circuit (ASIC), a field programmable gate array (FPGA) or other programming logic devices, discrete gates or transistor logic devices, or discrete hardware components. The methods, operations, and logical block diagrams disclosed in the embodiments of the disclosure may be implemented or executed. The general-purpose processor may be a microprocessor or the processor may further be any conventional processor or the like. The operations of the methods disclosed in the embodiments of the disclosure may be directly embodied as being executed and completed by a hardware decoding processor, or executed and completed by a combination of hardware and software modules in the decoding processor. The software module may be located in a mature storage medium in the field, such as a random access memory, a flash memory, a read-only memory, a programmable read-only memory, or an electrically erasable programmable memory or a register. The storage medium is located in the memory, and the processor reads the information in the memory and performs the operations of the above-mentioned methods in combination with the hardware.

It can be understood that the memory in the embodiments of the disclosure may be a transitory memory or a non-transitory memory, or may include both transitory and non-transitory memory. Among them, the non-transitory memory may be a read-only memory (ROM), a programmable ROM (PROM), an erasable PROM (EPROM), an electrically EPROM (EEPROM) or a flash memory. The transitory memory may be a random access memory (RAM), which is used as an external cache. By way of exemplary but not restrictive description, many forms of RAM are available, such as static RAMs (SRAM), dynamic RAMs (DRAM), synchronous DRAMs (SDRAM), double data rate SDRAMs (DDR SDRAM), enhanced SDRAMs (ESDRAM), synchlink DRAMs (SLDRAM)) and direct rambus RAMs (DR RAM). It should be noted that the memories in the systems and methods described herein are intended to include, but are not limited to these and any other suitable types of memories.

It should be understood that the foregoing memory is exemplary but not restrictive. For example, the memory in the embodiments of the disclosure may further be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) or a direct rambus RAM (DR RAM), or the like. That is to say, the memory in the embodiments of the disclosure is intended to include but is not limited to these and any other suitable types of memories.

FIG. 14 is a block diagram of a communication system 800 according to an embodiment of the present disclosure. As illustrated in FIG. 14, the communication system 800 includes a terminal 810 and a network device 820.

The terminal 810 may be configured to implement corresponding functions implemented by the UE in the methods described above, and the network device 820 may be configured to implement corresponding functions implemented by the network device in the methods described above.

Embodiments of the present disclosure further provide a computer-readable storage medium for storing computer programs.

In an embodiment, the computer-readable storage medium may be applied to the network device or terminal device in the embodiments of the present disclosure, and the computer programs cause the computer to perform the corresponding flow implemented by the network device or the terminal device in the methods in the embodiments of the present disclosure. For brevity, details are not described herein.

Embodiments of the present disclosure further provide a computer program product including computer program instructions.

In an embodiment, the computer program product may be applied to the network device or terminal device in the embodiments of the present disclosure, and the computer program instruction causes the computer to perform the corresponding flow implemented by the network device or the terminal device in the methods in the embodiments of the present disclosure. For brevity, details are not described herein.

Embodiments of the present disclosure further provide a computer program.

In an embodiment, the computer program may be applied to the network device or terminal device in the embodiments of the present disclosure. When the computer program is run on a computer, the computer performs the corresponding flow implemented by the network device or the terminal device in the methods in the embodiments of the present disclosure. For brevity, details are not described herein.

Those of ordinary skill in the art will appreciate that the units and algorithm operations of the examples described in connection with the embodiments disclosed herein can be implemented in the electronic hardware, or a combination of computer software and electronic hardware. Whether these functions are performed in hardware or software depends on the specific application and design constraints of the technical solution. A person skilled in the art may implement the described functions using different methods for each particular application, but such implementation should not be considered beyond the scope of the present disclosure.

Those skilled in the art will clearly understand that for the convenience and brevity of the description, for the specific working process of the system, apparatus and unit described above, reference may be made to the corresponding process in the foregoing method embodiments, and details are not described herein again.

In the several embodiments provided herein, it should be understood that the disclosed systems, apparatus, and methods may be implemented in other ways. For example, the apparatus embodiments described above are merely illustrative. For example, the division of the units is merely a logical function division, and may be implemented in other ways. For example, multiple units or components may be combined or integrated into another system, or some features may be ignored or not performed. In addition, the displayed or discussed coupling or direct coupling or communication connection may be implemented via some interface, indirect coupling or communication connection among devices or units, and may be in electrical, mechanical or other form.

The units described as separate units may or may not be physically separate, and the units displayed as units may or may not be physical units, i.e. may be located in one place, or may be distributed over multiple network units. Some or all of the units may be selected according to actual needs to achieve the objectives of the solutions of the embodiments.

In addition, each functional unit in various embodiments of the present disclosure may be integrated into one processing unit, or each unit may exist physically alone, or two or more units may be integrated into one unit.

The functions may be stored in a computer-readable storage medium if they are implemented as software functional units and sold or used as stand-alone products. Based on such an understanding, the technical solutions of the present disclosure essentially or part of the contribution to the prior art or part of the technical solutions may be embodied in the form of a software product stored in a storage medium, including several instructions for causing a computer device (which may be a personal computer, a server, a network device, or the like) to perform all or part of the operations of the methods described in the embodiments of the present disclosure. The foregoing storage medium includes a USB flash drive, a removable hard disk, a read-only memory (ROM), a random access memory (RAM), a magnetic disk, an optical disc, or any other medium that can store program codes.

The foregoing descriptions are merely specific embodiments of the present disclosure, but the protection scope of the present disclosure is not limited thereto. Any change or replacement readily conceived by a person skilled in the art within the technical scope disclosed in the present disclosure shall fall within the protection scope of the present disclosure. Therefore, the protection scope of the present disclosure shall be subject to the protection scope of the claims.

## Claims

1. A method for data transmission, comprising:
transmitting, by a network device, downlink information to user equipment (UE),
wherein the downlink information comprises: scheduling information for a downlink (DL) resource, and indication information for determining an uplink (UL) resource paired with the DL resource.

2. The method of claim 1, wherein the downlink information is carried by downlink control information (DCI) or a media access control control element (MAC CE).

3. The method of claim 1, wherein the indication information comprises at least one of:
an indication of whether the UL resource paired with the DL resource exists;
an indication of whether the UL resource paired with the DL resource is to be activated;
information of a UL resource scheduled for the UE;
a UL resource activation indication;
an identifier of the UL resource paired with the DL resource; or,
an identifier of the DL resource.

4. The method of any one of claims 1 to 3, further comprising:
transmitting, by the network device, to the UE, parameter configuration information for data transmission,
wherein the parameter configuration information for data transmission comprises at least one of:
at least one DL resource configured for the UE; or,
at least one UL resource configured for the UE.

5. The method of claim 4, wherein the parameter configuration information for data transmission further comprises:
a linkage relationship between the at least one DL resource and the at least one UL resource.

6. The method of claim 4 or 5, wherein the parameter configuration information for data transmission further comprises:
information of a group to which the UE belongs in group scheduling.

7. The method of claim 4, wherein the parameter configuration information for data transmission is carried by a radio resource control (RRC) message or a broadcast message.

8. The method of any one of claims 1 to 7, further comprising:
transmitting, by the network device, first information to the UE,
wherein the first information is used by the UE to determine whether to perform an uplink feedback.

9. The method of claim 8, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

10. The method of claim 9, wherein the first information further comprises:
information of a group to which the UE belongs in group scheduling.

11. The method of claim 9, wherein the first information further comprises at least one of:
a time period during which no uplink feedback for DL scheduling is performed;
a time pattern in which no uplink feedback for DL scheduling is performed; or,
an identifier of a logical channel for which no uplink feedback is performed.

12. The method of claim 8, wherein the first information is carried by one of: downlink control information (DCI), a media access control control element (MAC CE), or, radio resource control (RRC) signaling.

13. The method of any one of claims 8 to 12, further comprising:
allocating a dynamically scheduled DL resource to the UE, or, activating at least one configured DL resource.

14. The method of any one of claims 1, 4 or 8, further comprising:
receiving second information, wherein the second information comprises at least one of: a type of the UE, a traffic type supported by the UE, a traffic type used by the UE, or, capability information of the UE about whether to support not performing an uplink feedback.

15. The method of claim 14, further comprising:
determining, based on the second information, whether to transmit the first information to the UE; or,
determining, based on the second information, whether to generate the downlink information for the UE; or,
determining, based on the second information, whether to configure, for the UE, parameter configuration information for data transmission.

16. A method for data transmission, comprising:
transmitting, by a network device, first information to user equipment (UE),
wherein the first information is used by the UE to determine whether to perform an uplink feedback.

17. The method of claim 16, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

18. The method of claim 17, wherein the first information further comprises:
information of a group to which the UE belongs in group scheduling.

19. The method of claim 17, wherein the first information further comprises:
a time period during which no uplink feedback for DL scheduling is performed;
a time pattern in which no uplink feedback for DL scheduling is performed;
an identifier of a logical channel for which no uplink feedback is performed.

20. The method of claim 17, wherein the first information is carried by one of: downlink control information (DCI), a media access control control element (MAC CE), or, radio resource control (RRC) signaling.

21. A method for data transmission, comprising:
receiving, by user equipment (UE), downlink information from a network device, wherein the downlink information comprises: scheduling information for a downlink (DL) resource, and indication information for determining an uplink (UL) resource paired with the DL resource.

22. The method of claim 21, wherein the downlink information is carried by downlink control information (DCI) or a media access control control element (MAC CE).

23. The method of claim 21, wherein the indication information for determining the uplink (UL) resource paired with the DL resource comprises at least one of:
an indication of whether the UL resource paired with the DL resource exists;
an indication of whether the UL resource paired with the DL resource is to be activated;
information of a UL resource scheduled for the UE;
a UL resource activation indication;
an identifier of the UL resource paired with the DL resource; or,
an identifier of the DL resource.

24. The method of any one of claims 21 to 23, further comprising:
receiving, from the network device, parameter configuration information for data transmission,
wherein the parameter configuration information for data transmission comprises at least one of:
at least one DL resource configured for the UE; or,
at least one UL resource configured for the UE.

25. The method of claim 24, wherein the parameter configuration information for data transmission further comprises:
a linkage relationship between the at least one DL resource and the at least one UL resource.

26. The method of claim 24 or 25, wherein the parameter configuration information for data transmission further comprises:
information of a group to which the UE belongs in group scheduling.

27. The method of claim 24, wherein the parameter configuration information for the data transmission is carried by a radio resource control (RRC) message or a broadcast message.

28. The method of any one of claims 21 to 27, further comprising:
determining, based on the downlink information, a scheduled DL resource and a scheduled or activated UL resource paired with the DL resource; and
performing data transmission based on the UL resource paired with the DL resource.

29. The method of any one of claims 21 to 27, further comprising:
receiving first information from the network device, wherein the first information is used by the UE to determine whether to perform an uplink feedback; and
determining, based on the first information, whether to perform the uplink feedback.

30. The method of claim 29, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

31. The method of claim 30, wherein the first information further comprises:
information of a group to which the UE belongs in group scheduling.

32. The method of claim 31, wherein the first information further comprises:
a time period during which no uplink feedback for DL scheduling is performed;
a time pattern in which no uplink feedback for DL scheduling is performed;
an identifier of a logical channel for which no an uplink feedback is performed.

33. The method of claim 30, wherein the first information is carried by one of: downlink control information (DCI), a media access control control element (MAC CE), or, radio resource control (RRC) signaling.

34. The method of any one of claims 29 to 33, further comprising:
receiving a dynamically scheduled DL resource allocated by the network device for the UE, or, activating at least one configured DL resource.

35. The method of any one of claims 21 to 34, further comprising:
transmitting second information to the network device, wherein the second information comprises at least one of: a type of the UE, a traffic type supported by the UE, a traffic type used by the UE, or, capability information of the UE about whether to support not performing an uplink feedback.

36. A method for data transmission, comprising:
receiving first information from a network device, wherein the first information is used by user equipment (UE) to determine whether to perform an uplink feedback; and
determining, based on the first information, whether to perform the uplink feedback.

37. The method of claim 36, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

38. The method of claim 37, wherein the first information further comprises:
information of a group to which the UE belongs in group scheduling.

39. The method of claim 37, wherein the first information further comprises:
a time period during which no uplink feedback for DL scheduling is performed;
a time pattern in which no uplink feedback for DL scheduling is performed;
an identifier of a logical channel for which no uplink feedback is performed.

40. The method of claim 37, wherein the first information is carried by one of: downlink control information (DCI), a media access control control element (MAC CE), or, radio resource control (RRC) signaling.

41. A network device, comprising:
a first communication unit, configured to transmit downlink information to user equipment (UE);
wherein the downlink information comprises: scheduling information for a downlink (DL) resource, and indication information for determining an uplink (UL) resource paired with the DL resource.

42. The network device of claim 41, wherein the downlink information is carried by at least one of downlink control information (DCI) or a media access control control element (MAC CE).

43. The network device of claim 41, wherein the indication information for determining the UL resource paired with the DL resource comprises at least one of:
an indication of whether the UL resource paired with the DL resource exists;
an indication of whether the UL resource paired with the DL resource is to be activated;
information of a UL resource scheduled for the UE;
a UL resource activation indication;
an identifier of the UL resource paired with the DL resource; or,
an identifier of the DL resource.

44. The network device of any one of claims 41 to 43, wherein the first communication unit is configured to:
transmit, to the UE, parameter configuration information for data transmission,
wherein the parameter configuration information for data transmission comprises at least one of:
at least one DL resource configured for the UE; or,
at least one UL resource configured for the UE.

45. The network device of claim 44, wherein the parameter configuration information for data transmission further comprises:
a linkage relationship between the at least one DL resource and the at least one UL resource.

46. The network device of claim 44 or 45, wherein the parameter configuration information for data transmission further comprises:
information of a group to which the UE belongs in group scheduling.

47. The network device of claim 44, wherein the parameter configuration information for data transmission is carried by a radio resource control (RRC) message or a broadcast message.

48. The network device of any one of claims 41 to 47, wherein the first communication unit is configured to:
transmit first information to the UE,
wherein the first information is used by the UE to determine whether to perform an uplink feedback.

49. The network device of claim 48, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

50. The network device of claim 49, wherein the first information further comprises:
information of a group to which the UE belongs in group scheduling.

51. The network device of claim 49, wherein the first information further comprises at least one of:
a time period during which no uplink feedback for DL scheduling is performed;
a time pattern in which no uplink feedback for DL scheduling is performed; or,
an identifier of a logical channel for which no uplink feedback is performed.

52. The network device of claim 48, wherein the first information is carried by one of:
downlink control information (DCI), a media access control control element (MAC CE), or, radio resource control (RRC) signaling.

53. The network device of any one of claims 48 to 52, wherein the first communication unit is configured to:
allocate a dynamically scheduled DL resource to the UE, or, activate at least one configured DL resource.

54. The network device of any one of claims 41, 44 or 48, wherein the first communication unit is configured to:
receive second information, wherein the second information comprises at least one of: a type of the UE, a traffic type supported by the UE, a traffic type used by the UE, or, capability information of the UE about whether to support not performing an uplink feedback.

55. The network device of claim 54, wherein the network device further comprises a first processing unit, configured to:
determine, based on the second information, whether to transmit the first information to the UE; or,
determine, based on the second information, whether to generate the downlink information for the UE; or,
determine, based on the second information, whether to configure, for the UE, parameter configuration information for data transmission.

56. A network device, comprising a second communication unit, configured to:
transmit first information to user equipment (UE),
wherein the first information is used by the UE to determine whether to perform an uplink feedback.

57. The network device of claim 56, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

58. The network device of claim 57, wherein the first information further comprises:
information of a group to which the UE belongs in group scheduling.

59. The network device of claim 57, wherein the first information further comprises:
a time period during which no uplink feedback for DL scheduling is performed;
a time pattern in which no uplink feedback for DL scheduling is performed;
an identifier of a logical channel for which no uplink feedback is performed.

60. The network device of claim 57, wherein the first information is carried by one of:
downlink control information (DCI), a media access control control element (MAC CE), or, radio resource control (RRC) signaling.

61. User equipment (UE), comprising:
a third communication unit, configured to receive downlink information from a network device, wherein the downlink information comprises: scheduling information for a downlink (DL) resource, and indication information for determining an uplink (UL) resource paired with the DL resource.

62. The UE of claim 61, wherein the downlink information is carried by at least one of downlink control information (DCI) or a media access control control element (MAC CE).

63. The UE of claim 61, wherein the indication information for determining the uplink (UL) resource paired with the DL resource comprises at least one of:
an indication of whether the UL resource paired with the DL resource exists;
an indication of whether the UL resource paired with the DL resource is to be activated;
information of a UL resource scheduled for the UE;
a UL resource activation indication;
an identifier of the UL resource paired with the DL resource; or,
an identifier of the DL resource.

64. The UE of any one of claims 61 to 63, wherein the third communication unit is configured to:
receive, from the network device, parameter configuration information for data transmission,
wherein the parameter configuration information for data transmission comprises at least one of:
at least one DL resource configured for the UE; or,
at least one UL resource configured for the UE.

65. The UE of claim 64, wherein the parameter configuration information for data transmission further comprises:
a linkage relationship between the at least one DL resource and the at least one UL resource.

66. The UE of claim 64 or 65, wherein the parameter configuration information for data transmission further comprises:
information of a group to which the UE belongs in group scheduling.

67. The UE of claim 64, wherein the parameter configuration information for the data transmission is carried by a radio resource control (RRC) message or a broadcast message.

68. The UE of any one of claims 61 to 67, further comprising a third processing unit, wherein
the third processing unit is configured to determine, based on the downlink information, a scheduled DL resource and a scheduled or activated UL resource paired with the DL resource; and
the third communication unit is configured to perform data transmission based on the UL resource paired with the DL resource.

69. The UE of any one of claims 61 to 67, wherein the third communication unit is configured to receive first information from the network device, wherein the first information is used by the UE to determine whether to perform an uplink feedback; and
the UE further comprises a third processing unit, configured to determine, based on the first information, whether to perform the uplink feedback.

70. The UE of claim 69, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

71. The UE of claim 70, wherein the first information further comprises:
information of a group to which the UE belongs in group scheduling.

72. The UE of claim 71, wherein the first information further comprises:
a time period during which no uplink feedback for DL scheduling is performed;
a time pattern in which no uplink feedback for DL scheduling is performed;
an identifier of a logical channel for which no an uplink feedback is performed.

73. The UE of claim 70, wherein the first information is carried by one of: downlink control information (DCI), a media access control control element (MAC CE), or, radio resource control (RRC) signaling.

74. The UE of any one of claims 69 to 73, wherein the third communication unit is configured to:
receive a dynamically scheduled DL resource allocated by the network device for the UE, or, activate at least one configured DL resource.

75. The UE of any one of claims 61 to 74, wherein the third communication unit is configured to:
transmit second information to the network device, wherein the second information comprises at least one of: a type of the UE, a traffic type supported by the UE, a traffic type used by the UE, or capability information of the UE about whether to support not performing an uplink feedback.

76. User equipment (UE), comprising:
a fourth communication unit, configured to receive first information from a network device, wherein the first information is used by the UE to determine whether to perform an uplink feedback; and
a fourth processing unit, configured to determine, based on the first information, whether to perform the uplink feedback.

77. The UE of claim 76, wherein the first information comprises at least one of:
indication information indicating whether the UE performs an uplink feedback;
a UE type for which no uplink feedback is performed;
a traffic type for which no uplink feedback is performed;
a UE group identifier for which no uplink feedback is performed;
a UE identifier for which no uplink feedback is performed; or,
a process identifier for which no uplink feedback is performed.

78. The UE of claim 77, wherein the first information further comprises:
information of a group to which the UE belongs in group scheduling.

79. The UE of claim 77, wherein the first information further comprises:
a time period during which no uplink feedback for DL scheduling is performed;
a time pattern in which no uplink feedback for DL scheduling is performed;
an identifier of a logical channel for which no uplink feedback is performed.

80. The UE of claim 77, wherein the first information is carried by one of: downlink control information (DCI), a media access control control element (MAC CE), or, radio resource control (RRC) signaling.

81. A network device, comprising a processor and a memory for storing a computer program executable by the processor,
wherein the memory is configured to store the computer program, and the processor is configured to invoke and execute the computer program stored in the memory to perform the method of any one of claims 1 to 20.

82. User equipment (UE), comprising a processor and a memory for storing a computer program executable by the processor,
wherein the memory is configured to store the computer program, and the processor is configured to invoke and execute the computer program stored in the memory to perform the method of any one of claims 21 to 40.

83. A chip, comprising a processor configured to invoke and execute a computer program from a memory to cause a device equipped with the chip to perform the method of any one of claims 1 to 20.

84. A chip, comprising a processor configured to invoke and execute a computer program from a memory to cause a device equipped with the chip to perform the method of any one of claims 21 to 40.

85. A computer-readable storage medium for storing a computer program that, when executed by a computer, causes the computer to perform the method of any one of claims 1 to 40.

86. A computer program product comprising computer program instructions that, when executed by a computer, cause the computer to perform the method of any one of claims 1 to 40.

87. A computer program for causing a computer to perform the method of any one of claims 1 to 40.
